# EUROPÄISCHE PATENTSCHRIFT

(11) **EP 0 902 847 B1**
(45) Veröffentlichungstag und Bekanntmachung des Hinweises auf die Patenterteilung: **12.04.2000**
(21) Anmeldenummer: 97924004.1
(22) Anmeldetag: 26.05.1997
(51) Int. Cl.: C25B 9/00, H01M 4/86, C25B 15/08

(54) **ELEKTROCHEMISCHE HALBZELLE MIT DRUCKKOMPENSATION**
ELECTROCHEMICAL HALF-CELL WITH PRESSURE COMPENSATION
DEMI-CELLULE ELECTROCHIMIQUE A COMPENSATION DE PRESSION

(30) Priorität: 07.06.1996 DE 19622744
(43) Veröffentlichungstag der Anmeldung: 24.03.1999
(73) Patentinhaber: BAYER AG, 51368 Leverkusen (DE)
(72) Erfinder: GESTERMANN, Fritz, D-51377 Leverkusen (DE); PINTER, Hans, Dieter, D-42929 Wermelskirchen (DE)
(86) Internationale Anmeldenummer: EP9702689
(87) Internationale Veröffentlichungsnummer: WO9747787

(56) Entgegenhaltungen:
- EP-A- 0 717 130
- PATENT ABSTRACTS OF JAPAN vol. 095, no. 011, 26.Dezember 1995 & JP 07 220728 A (TANAKA KIKINZOKU KOGYO KK;OTHERS: 01), 18.August 1995,

## Beschreibung

Die Erfindung betrifft eine elektrochemische Halbzelle bestehend wenigstens aus einem Elektrodenraum zur Aufnahme eines Elektrolyten, einem Gasraum und mindestens einer Gasraum und Elektrodenraum trennenden Gasdiffusionselektrode als Anode oder Kathode, bei der der Gasraum in zwei oder mehrere übereinanderliegende Gastaschen aufgeteilt ist, in denen eine Gaszufuhr bzw. Gasabfuhr über getrennte Öffnungen erfolgt und der Druck auf der Elektrolytseite der Elektrode gegenüber dem Druck auf der Gasseite der Elektrode durch eine Öffnung der Gastaschen zum Elektrolyten kompensiert wird.

Der Betrieb von elektrochemischen Zellen auf Basis von Gasdiffusionselektroden, z.B. für die Anwendung als Sauerstoffverzehrkathode bei der Alkalihalogenid-Elektrolyse, ist grundsätzlich bekannt und z.B. beschrieben in der Patentschrift US 4 657 651.

Die Gasdiffusionselektrode ist eine offenporige Membran zwischen Elektrolyt und Gasraum, die eine elektrisch leitende Schicht mit Katalysator aufweist, und es erlauben soll eine elektrochemische Reaktion, z.B. Reduktion von Sauerstoff, an der Dreiphasengrenze von Elektrolyt, Katalysator und Reaktantgas in der Membran zu betreiben. Die Grenzschicht wird im allgemeinen durch die Oberflächenspannung des Elektrolyten auf dem hydrophoben Elektrodenmaterial entgegen dem hydrostatischen Druck des Elektrolyten auf die Membran in der Membran gehalten. Dabei ist jedoch nur ein geringes Druckgefälle zwischen Gasseite und Flüssigkeitsseite der Membran zulässig. Ist der gasseitige Druck zu hoch, so bricht schließlich das Gas durch die Membran durch und die Elektrode wird in diesem Bereich in ihrer Funktion gestört und der Elektrolysevorgang wird unterbrochen. Ist andererseits der Flüssigkeitsdruck zu hoch, so wird die Dreiphasengrenze aus dem den Katalysator enthaltenden Bereich in der Membran gedrückt, was die Funktion der Kathode ebenfalls stört und bei weiterer Druckerhöhung zu einem Flüssigkeitsdurchbruch von Elektrolyt in den Gasraum führt. Bei senkrechter Elektrodenanordnung, wie sie z.B. bei Membranelektrolysen notwendig ist, um das Zielprodukt Chlor günstig abführen zu können, führt dies zu einer Begrenzung der Bauhöhe der Gasdiffusionselektroden, da sonst oben Gas an der Elektrode in den Kathodenraum sowie unten Elektrolyt-Flüssigkeit in den Gasraum durchdrückt. Die technisch realisierbare Bauhöhe bleibt deshalb auf ca. 20-30 cm beschränkt, was für die marktüblichen Membranelektrolyseure unattraktiv ist.

Zur Lösung des Problems der Druckkompensation sind verschiedene Anordnungen im Stand der Technik vorgeschlagen worden.

Nach der Patentschrift US 4 657 651 wird ein Druckausgleich zwischen dem Gasraum und dem Elektrolytraum zu beiden Seiten einer Gasdiffusionskathode dadurch erziehlt, daß die Kathode in einzelne horizontale Kammern unterteilt wird, die individuell mit Gas beaufschlagt werden, wobei der Gasdruck durch Tauchung des jeweils abgehenden Gasstromes in vertikale Kammern dadurch geregelt ist, daß deren Tiefe der Elektrolythöhe über der jeweiligen Kammer entspricht. Nachteilig ist hier der hohe apparative Aufwand, der einer technischen Realisierung im Wege steht. Der Druck in jeder einzelnen Gaskammer soll hier nämlich separat eingestellt werden, über jeweilige Ventile.

Die DE-A-4 444 114 beschreibt eine elektrochemische Halbzelle mit Gasdiffusionselektrode, bei der eine Druckkompensation zwischen dem Gasraum und dem Elektrolytraum zu beiden Seiten einer Gasdiffusionselektrode dadurch erreicht wird, daß der Gasraum in zwei oder mehrere kaskadenartig übereinanderliegende Gastaschen aufgeteilt ist, die voneinander getrennt sind und zum Elektrolyten nach unten hin offen sind, so daß der Druck in jeder Gastasche über die Öffnung zum Elektrolyten im Gleichgewicht zum Druck der Flüssigkeitssäule des Elektrolyten im entsprechenden Teil des vor der Gasdiffusionselektrode liegenden Elektrodenraums steht, und bei denen eine eventuelle Gaszu- bzw. Gasabfuhr über die Öffnungen zum Elektrolyten erfolgt.

In der Veröffentlichung "Meeting Abstracts 96-1, Abstract No. 949; Spring Meeting May 5 - 10 / 1996" der "Electrochemical Society" ist eine Zelle mit Sauerstoffdiffusionskathode für die Chlor-Alkali-Elektrolyse im Labormaßstab bekannt gemacht worden, die in vereinfachter Art von der Idee der Druckkompensation entsprechend der DE-A-4 444 114 Gebrauch macht. In der Fig. 1 des Abstracts No. 949 ist eine Aufteilung des Gasraumes vor der Sauerstoffkathode in zwei übereinanderliegende Gastaschen zu sehen, in die vom Boden der Zelle perlender Sauerstoff durch freie Öffnungen der Gastaschen einströmt. Durch die vertikale Aufteilung des Gasraumes in zwei Gastaschen wird eine Druckkompensation erreicht. Der auf der Membran lastende Druck entspricht maximal dem hydrostatischen Druck entsprechend der Höhe der einzelnen Gastasche.

Der Aufbau der letztgenannten Elektrolysenzelle weist eine Reihe von Nachteilen auf, die den Betrieb der Diffusionselektrode stören.

Die Gaszufuhr und die Gasabfuhr erfolgen über die gleiche Öffnung einer Gastasche zum Elektrolyten. Dadurch wird der Austausch des in der jeweiligen Gastasche befindlichen Reaktantgases erheblich gestört, da der Tasche zugeführtes Gas gleich über die Unterkante der Gastasche zur nächsthöher liegenden Gastasche weiterperlt. Man findet lediglich eine gewisse Vermischung aufgrund des Aufplatzens der Gasblasen im Gasraum hinter der Elektrode. Die aktive Abfuhr unerwünschter Fremdgase aus dem Gasraum der Zelle ist in der bekannten Elektrolysezelle nicht möglich.

Darüber hinaus ist ein ausreichendes Auffangen der aufsteigenden Gasblasen durch die gleichweit vorragende Sammelschürze der oberen Gastasche nur bedingt möglich. Einfache Experimente zeigen, daß der überwiegende Teil der Gasblasen an der oberen Sammelschürze der bekannten Elektrolysezelle vorbeiströmt.

Das Platzen der Gasblasen am Meniskus des Elektrolyten in der jeweiligen Gastasche hat darüberhinaus zur Folge, daß sich im Gasraum ein unerwünschter Sprühnebel von Elektrolyttröpfchen bildet, der sich auf der Diffusionselektrode niederschlägt und die Funktion der Diffusionselektrode beeinträchtigt.

Die vom Stand der Technik weitergehende Aufgabe der Erfindung besteht darin, eine elektrochemische Halbzelle zu entwickeln, die die Vorteile der einfachen Druckkompensation aufweist, zugleich aber die genannten Nachteile der bekannten Zellen nicht aufweist und insbesondere eine aktive Belüftung des Gasraums hinter der Diffusionselektrode ermöglicht.

Die Aufgabe wird erfindungsgemäß gelöst durch eine elektrochemische Halbzelle, die Gegenstand der Erfindung ist, bestehend wenigstens aus einem Elektrodenraum zur Aufnahme eines Elektrolyten, einem Gasraum und mindestens einer Gasraum und Elektrodenraum trennenden Gasdiffusionselektrode als Anode oder Kathode, in der der Gasraum in zwei oder mehrere übereinanderliegende Gastaschen aufgeteilt ist, die voneinander getrennt sind und je eine Öffnung zum Elektrolyten hin aufweisen, so daß der Druck in jeder Gastasche über die Öffnung zum Elektrolyten im Gleichgewicht zum Druck der Flüssigkeitssäule des Elektrolyten im entsprechenden Teil des vor der Gasdiffusionselektrode liegenden Elektrodenraums steht, dadurch gekennzeichnet, daß die Gaszuführung und die Gasabführung der einzelnen Gastasche räumlich voneinander getrennt sind.

Insbesondere sind die Gaszuführung und die Gasabführung in einer Gastasche seitlich voneinander versetzt angebracht, so daß eine seitliche Strömung des Elektrodengases in der Gastasche resultiert.

Durch die Zwangsführung des Elektrodengases wird der Gasaustausch in der jeweiligen Gastasche verbessert und die Ansammlung unerwünschter Fremdgase, die z.B. bei der bekannten Zellanordnung auftritt, vermieden.

Darüber hinaus wird durch den isothermen unmittelbaren Kontakt des Elektrodengases mit dem Elektrolyten dafür gesorgt, daß das Gas auf der Gasseite der Diffusionselektrode immer gesättigt feucht ist und dadurch ein "Auskristallisieren" von Elektrolytfeststoffen, insbesondere in der Membranstruktur der Diffusionselektrode vermieden wird.

Damit wird eine irreversible Schädigung der Elektrode durch Elektrolytkristalle verhindert.

In einer besonderen Ausführung der Erfindung sind die Gastaschen als allseitig geschlossene Kammern ausgebildet, deren eine Begrenzungswand die Gasdiffusionselektrode ist und die an einem seitlichen Ende die Gaszuführung mit Elektrodengas aufweisen. Am anderen seitlichen Ende der Gastaschen erfolgt die Abfuhr des überschüssigen Elektrodengases über eine Tauchung in die druckkompensierende, stagnierende Elektrolytflüssigkeit. Durch diese Anordnung von Bespeisung auf der einen Seite und Abfuhr der Überschußgase auf der anderen Seite der Gastasche, werden die Gastaschen über eine seitliche Zwangsströmung aktiv vom Elektrodengas durchströmt. Der Druckausgleich zwischen Gasraum und Elektrodenraum erfolgt bei dieser Zellenanordnung über die Gasabführung. Vorteilhaft gegenüber der einfachen Anordnung ist, daß durch die genannte Ausführung der Halbzelle ein aktiver Gasaustausch in der Gastasche erfolgt, der über die Vorgabe der Überschußgasmenge gesteuert werden kann. Dies unterbindet eine mögliche Anreicherung von störenden Fremdgasen in den Gastaschen. Außerdem wird hierdurch die Verwendung von weniger reinem Elektrodengas möglich oder auch - je nach Anwendung der Halbzelle - die Abführung von gegebenenfalls anfallendem Produktgas aus der Elektrodenreaktion andererseits möglich.

In einer bevorzugten Variante der Erfindung wird die seitliche Zwangsbelüftung der Halbzelle mit Elektrodengas dadurch erreicht, daß Gaszuführung und Gasabführung von einer Gastasche zur nächst höherliegenden Gastasche abwechselnd angeordnet sind, so daß die Gasabführung einer Gastasche unter der Gaszuführung der nächst höherliegenden Gastasche angeordnet ist.

Die Gastaschen können Gassammelschürzen aufweisen, die auf der Rückwand der Gastasche befestigt sind. In der einfachsten Form setzt dabei ein Leitblech zum Einsammeln der von einer unteren Gastaschenabführung aufsteigenden Gasblase senkrecht auf der Rückwand der Gastasche an und überragt seitlich den Auslaß der darunter befindlichen Gastaschenabführung.

Eine solche Anordnung bietet gegenüber einer aus dem Stand der Technik bekannten Anordnung mit übereinanderliegenden Gastaschen, deren Gassammelschürzen einen Teil der Rückwand der Gastaschen bilden, den Vorteil, daß die erfindungsgemäße Halbzelle wesentlich schmaler gebaut werden kann, da die Gassammelschürze der bekannten Anordnung weit nach hinten von der Gasdiffusionselektrode wegragt, während die Ausdehnung der seitlich angebrachten Gassammelschürzen in der Senkrechten, von der Elektrodenfläche gesehen, klein gehalten werden kann.

In einer Variante der Erfindung wird anstelle der seitlichen Gassammelschürzen ein Blasenkanal als Gaszuführung für die Gastaschen verwendet, der nach unten offen in den Elektrolyten ragt. Der Blasenkanal ist z.B. oberhalb des Auslasses der Gasabführung einer unteren Gastasche angeordnet, so daß austretendes Elektrodengas in den Blasenkanal einperlt. Der Blasenkanal kann an seinem unteren Ende einen seitlich verbreiterten Blasenfänger aufweisen.

In einer anderen Variante ist der untere Auslaß als U-Rohr ausgebildet, dessen einer Schenkel ein Stück weit offen bis in die Öffnung des Blasenkanals ragt.

Die genannten Varianten ermöglichen eine Übergabe des Elektrodengases von Gastasche zu Gastasche, so daß die am Meniskus der Elektrolytflüssigkeit ankommenden Gasblasen des Elektrodengases noch in einem Bereich außerhalb der eigentlichen Gastasche platzen. Hierdurch wird ein Bespritzen der Rückseite der Diffusionselektrode mit Elektrolyt vermieden. Dieses wird insbesondere auch dann erreicht, wenn der Blasenkanal oder die Gassammelschürze seitlich versetzt ist, z.B. zur Mitte der Halbzelle hin, gegenüber der Öffnung zur Kammer der Gastasche. In diesem Fall wird das in dem Blasenkanal bzw. Gassammelschürze gesammelte Gas über eine Rohrleitung seitlich zur Öffnung geführt.

Hierdurch wird eine besonders gute Reinigung vom Sprühnebel erreicht. Eventuelle Pulsationen durch Zerplatzen von Gasblasen werden nicht in die Gastasche übertragen.

Der Einlaß der Gaszuführung zu jeder Gastasche kann unterschiedlich ausgebildet sein. Außer der Anwendung einer einfachen Öffnung können auch mehrere übereinanderliegende Öffnungen oder eine oder mehrere, maximal über die Höhe der Gastasche ausgedehnte, Einlaßschlitze vorgesehen sein, um z.B. die Elektrodenrückseite über ihre ganze Höhe mit frischem Elektrodengas zu versorgen.

Zum Auffangen von Sprühnebeln können die Öffnungen mit Blechen als Sperren gegenüber der Elektrodenwand abgedeckt sein, an denen sich gegebenenfalls mit dem Gasstrom mitgerissener Elektrolyt absetzen und gegebenenfalls zurücklaufen kann.

Eine weitere Variante der erfindungsgemäßen Halbzelle mit Druckkompensation weist anstelle einer von Gastasche zu darüberliegender Gastasche durchlaufende Elektrodengasführung eine Einzelbespeisung der einzelnen übereinanderliegenden Gastaschen durch Gaszuführungsleitungen auf, die unter Umständen mit eigenen Regel- bzw. Absperrventilen ausgestattet sind.

Die Druckkompensation der einzelnen Gastaschen erfolgt hierbei jeweils über die offen in den Elektrolyten eintauchende Gasabführung der Gastaschen.

Diese bevorzugte Anordnung wird vorteilhaft dann eingesetzt, wenn z.B. bei der Elektrodenreaktion Schadgase, z.B. die Elektrodenreaktion inhibierende Gase, entstehen, die sich bei einer mäandrierenden Gasführung von der untersten Gastasche bis zur obersten Gastasche anreichern können.

Diese Anordnung ermöglicht auch das "Abschalten" eines Teilbereichs der Gasdiffusionselektrodenfläche durch Spülen der ausgewählten Gastasche mit einem Inertgas (z.B. einem Edelgas). Damit wird im laufenden Betrieb der Halbzelle eine Kontrolle der Einzelleistung der "ausgeschalteten" Elektrodenfläche möglich.

In allen vorgenannten Ausführungsformen der Erfindung stellt sich im Bereich jeder Gastasche ein Gasdruck ein, der der Flüssigkeitssäule von der jeweiligen Austrittsöffnung bzw. der Unterkante des Blasenmeniskus bis zur Oberkante der Flüssigkeitssäule zwischen Gastaschenkaskade und Rückwand der Elektrolysezelle entspricht. Dieser Druck wird kompensiert von der Flüssigkeitssäule in der Elektrodenkammer, wobei das Gleichgewicht bei gleicher Füllhöhe in beiden Kammern (z.B. bei hydraulischer Verbindung beider Kammern) an der jeweiligen Gas-Austrittsöffnung bzw. der Unterkante des vorgenannten Blasenmeniskus liegt. Da in der jeweiligen Gastasche homogener Druck herrscht, steht im Mittel ein leichter Überdruck gasseitig an, was im Sinne einer optimalen Funktion, z.B. der katalytischen Sauerstoffreduktion, auch wünschenswert ist.

Trennt man in einer weiteren bevorzugten Variante der erfindungsgemäßen Halbzelle den Elektrodenraum und den rückwärtigen Elektrolytraum hydraulisch, kann der jeweilige Differenzdruck, der ja für alle Kammern gleich ist, durch unterschiedlichen Füllstand oder Ablaufhöhe in beiden Räumen gezielt eingestellt werden.

So kann z.B. durch gesonderte Gasabfuhr über ein oben herausgeführtes Rohr zur Gasableitung und eine gegebenenfalls vorzusehende darüberliegende Elektrolytvorlage ein steuerbarer Überdruck eingestellt werden, der dann für alle Gastaschen gleich hoch gegenüber dem Elektrodenraum ist.

Wird hingegen der Elektrolytablauf der Zelle bevorzugt über ein Standrohr nach unten herausgeführt oder auch gegebenenfalls zu einer Seitenwand der Zelle, ist es unmittelbar möglich, Elektrolyt und Überschußgas gemeinsam abzuleiten, indem man den Elektrolyten aus dem Elektrodenraum ausschließlich oben über die Gastaschenelektrode in den rückwärtigen Elektrolytraum fließen läßt, von wo er über das Standrohr gemeinsam mit dem überschüssigen Sauerstoff aus der Zelle nach unten oder bei einem seitlichen Ablauf auch zur Seite austritt. Unterschiedliche Höhen des Standrohres führen zu unterschiedlichen Differenzdrucken, wobei diesmal der Flüssigkeitsdruck höher ist als der Gasdruck, was insbesondere für ein vollflächiges Anliegen tuchartiger Gasdiffusionselektroden auf dem Stromverteilergitter von Vorteil ist. Gegebenenfalls kann dann nämlich auf Halte- und Klemmvorrichtungen für die Elektrode verzichtet werden. Ganz analog zur gemeinsamen Abfuhr von Elektrolyt und Überschußgas über das Standrohr kann dies auch über ein seitlich an der Halbzelle angebrachtes Ableitrohr erfolgen, wobei die Trennung von Gas und Elektrolyt, z.B. in einem Sammler neben der Zelle erfolgt. Und auf diese Weise kann der Flüssigkeitsdruck höher als der Gasdruck über der Gasdiffusionselektrode eingestellt werden.

Die erfindungsgemäße Halbzelle kann durch entsprechende Anzahl von Gastaschen auf beliebige technisch sinnvolle Größen erweitert werden. Da die benötigte Gasmenge (z.B. Sauerstoff) für repräsentative Elektrolyselasten beispielsweise bei 0,7 bis 1 Normkubikmeter pro Quadratmeter Kathodenfläche und Stunde liegt, ist durch geeignete Größe der Blasenöffnungen ohne Probleme der notwendige Gastransport zu bewerkstelligen, wie hydraulische Versuche gezeigt haben.

Die Halterung und der elektrische Kontakt der Gasdiffusionselektrode, insbesondere in Halbzellen von Membranelektrolyseuren, ist grundsätzlich bekannt. Bei Verwendung mehrerer Elektrodensegmente als Gasdiffusionselektrode erfolgt die Halterung der Gasdiffusionselektrodensegmente gasdicht untereinander und gegenüber dem Elektrodenraum.

Die Halteelemente für die Gasdiffusionselektrode können z.B. als Klemmleisten bzw. geeignet ummantelte Magnetleisten ausgebildet sein, die zunächst als Montagehilfe dienen.

Die Halteelemente können sich im Falle von Elektrolysezellen mit zwischenliegender Ionenaustauschermembran nach dem Zusammenbau über die Ionenaustauschermembran an der dahinter aufliegenden Gegenelektrodenstruktur abstützen und so für eine entsprechende Anpressung an die Gasdiffusionselektrode sorgen, die damit auch elektrisch kontaktiert wird.

Die Halteelemente können bei einer Elektrolysezelle an ihrer, der Ionenaustauschermembran zugewandten Seite, in Strömungsrichtung liegende Einkerbungen ausweisen, die auch im verspannten Zustand der Elektrolysezelle einen homogenen Elektrolytdurchtritt von Abteilung zu Abteilung des Elektrodenraums erlauben.

Durch geeignete Verteilung der Einströmkerben, z.B. von unten nach oben zunehmende Anzahl von Kerben, wird eine zusätzliche hydraulische Druckbelastung der unteren Elektrodenabteile vermieden.

Ein elastischer Abstandhalter füllt in einer besonders bevorzugten Anordnung der Erfindung den schmalen Elektrodenraum aus, der nicht nur die Funktion als Abstandhalter und Turbulenzerzeuger für den Elektrolytstrom erfüllt, sondern auch über die genannten Halteelemente gelegt werden kann, mit diesen zusammen verspannt wird und dadurch eine weitere elastische Komponente für die Anpressung und Abdichtung der Gasdiffusionselektrode darstellt.

In einer anderen Ausführung wird die Abstandshaltung zwischen Gasdiffusionselektrode und Membran durch ummantelte Drähte gewährleistet, die senkrecht durch die einzelnen Abteilungen geführt werden und in die Einkerbungen der Halteelemente geklemmt werden.

Die Halterung der Gasdiffusionselektrodensegmente kann auch mit Hilfe einer Halteleiste mit T-Profil erfolgen, deren langer Schenkel in geeigneten Abschnitten in Laschen ausläuft, die dergestalt durch die Haltestruktur gesteckt werden, daß ein rückwärtiges Anziehen, z.B. über Spannkeile, die durch geeignet angebrachte Bohrungen getrieben werden, erfolgen kann. Über die kurzen Schenkel der T-förmigen Halteleiste werden so die Gasdiffusionselektrode und gegebenenfalls eine Dichtung derart auf die als niederohmige Stromzuführung ausgeführte Haltestruktur gepreßt, daß sowohl die Gasdichtigkeit wie auch ein guter Stromkontakt gewährleistet sind.

Die Stromzuführung zur Gasdiffusionselektrode kann nach im Prinzip bekannten Anordnungen erfolgen. Bevorzugt ist eine Anordnung der Stromzuführung über die Haltevorrichtung der Gasdiffusionselektrode, welche wiederum niederohmig mit der Rückseite der Elektrolysezelle zu einer externen Stromquelle verbunden ist, wobei an der Haltevorrichtung eine zusätzliche metallische Gitterstruktur angebracht ist, an der je nach Differenzdruck zwischen Elektrolytseite und Gasseite gasseitig oder elektrolyseitig die Gasdiffusionselektrode anliegt, und die für kurze Stromwege sorgt. Für den Fall einer Gasdiffusionselektrode mit integriertem metallischem Gitter kann gegebenenfalls auf die gesonderte metallische Gitterstruktur an der Haltevorrichtung verzichtet werden, wenn durch ein anderes einfaches Widerlager eine Abstützung der Diffusionselektrode in Richtung des Gasraumes gewährleistet ist.

Die Stromzuführung kann auch bevorzugt über eine niederohmige Verbindung zur Rückseite der Halbzelle erfolgen.

Eine vorteilhafte Ausführungsform der erfindungsgemäßen Halbzelle ist dadurch gekennzeichnet, daß die gesamte Struktur der Gastaschenelektrode aus der Halbzelle, z.B. einer Elektrolysehalbzelle, herausnehmbar gestaltet wird.

Die erfindungsgemäße Halbzelle läßt sich grundsätzlich in allen elektrochemischen Verfahren einsetzen, bei denen eine Gasdiffusionselektrode in unmittelbaren Kontakt mit einem flüssigen Elektrolyten betrieben wird. Beispiele für Verwendung der erfindungsgemäßen Halbzelle sind folgende:
Natriumdichromatelektrolyse; dabei wird beispielsweise eine Wasserstoffverzehrende Anode eingesetzt; die Wasserstoffproduktion an der Kathode kann dabei durch Sauerstoffreduktion an einer Sauerstoffverzehrkathode ersetzt werden;
die Wasserstoffperoxidproduktion über Sauerstoffreduktion an einer Gasdiffusionskatode;
die Anwendung für alkalische Brennstoffzellen, die z.B. zur Anreicherung von Natronlauge eingesetzt werden. Hierbei kann mit Halbzellen entsprechend der Erfindung, die als Anode zur Wasserstoffumsetzung geschaltet sind und solchen, die als Kathode zur Sauerstoffreduktion geschaltet sind, gearbeitet werden.

Mit Hilfe der erfindungsgemäßen Halbzelle lassen sich prinzipiell die üblichen marktgängigen Membranelektrolyseure zu Elektrolyse von Alkalihalogenidlösung, sofern sie eine genügend tiefe Kathodenkammer besitzen, auf den energiesparenden Betrieb mit z.B. Sauerstoffverzehrkatoden umstellen.

Dies gilt insbesondere auch für Zelltypen mit senkrechter Rippenstruktur oder senkrechten oder waagerechten Innenstrukturrippen.

Für die Anwendung in der erfindungsgemäßen Halbzelle können alle grundsätzlich bekannten Typen von Gasdiffusionselektroden eingesetzt werden, z.B. Typen mit integrierten metallischen Stütz- bzw. Stromverteilergittern oder auf Kohlenstofffliesen oder sonstige leitfähigen Strukturen aufgebaute Elektroden.

Weitere bevorzugte Ausführungsformen der erfindungsgemäßen Halbzelle sind den Unteransprüchen zu entnehmen.

Die Erfindung wird nachstehend anhand der Figuren beispielhaft näher erläutert, ohne die Erfindung im einzelnen einzuschränken.

In den Figuren zeigen:
- Figur 1: Eine Variante der erfindungsgemäßen Halbzelle, mit Blasenkanälen ausgeführt als Sauerstoffverzehrkathode, gezeichnet im Querschnitt parallel zur Diffusionselektrodenfläche.
- Figur 2: Einen Querschnitt durch die Halbzelle nach Figur 1 entsprechend der Linie B-B' in Figur 1.
- Figur 3: Einen Querschnitt durch die Halbzelle nach Figur 1 entsprechend der Linie C-C' in Figur 1.
- Figur 4: Das Detail einer Variante der erfindungsgemäßen Halbzelle nach Fig. 1 mit besonderer Gaszufuhr.
- Figur 5: Eine erfindungsgemäße Halbzelle mit seitlicher Ausdehnung der Gassammelschürzen im Querschnitt.
- Figur 6: Ein Beispiel der erfindungsgemäßen Halbzelle mit direkter Gaszuführung der einzelnen Gastaschen im Querschnitt.
- Figur 7: Einen Schnitt entsprechend der Linie A-A' in Figur 6 durch die Halbzelle gemäß Figur 6.
- Figur 7a: Ein vergrößertes Detail von Figur 7.
- Figur 8: Einen Schnitt entsprechend der Linie B-B' in Figur 6 durch die Halbzelle gemäß Figur 6.
- Figur 9: Eine Variante der Halbzelle nach Figur 6 mit Gaszuführung der Gastaschen über Einsteckrohre im Querschnitt.
- Figur 10: Einen Schnitt entsprechend der Linie A-A' in Figur 9 durch die Halbzelle gemäß Figur 9.

### Beispiele

### Beispiel 1

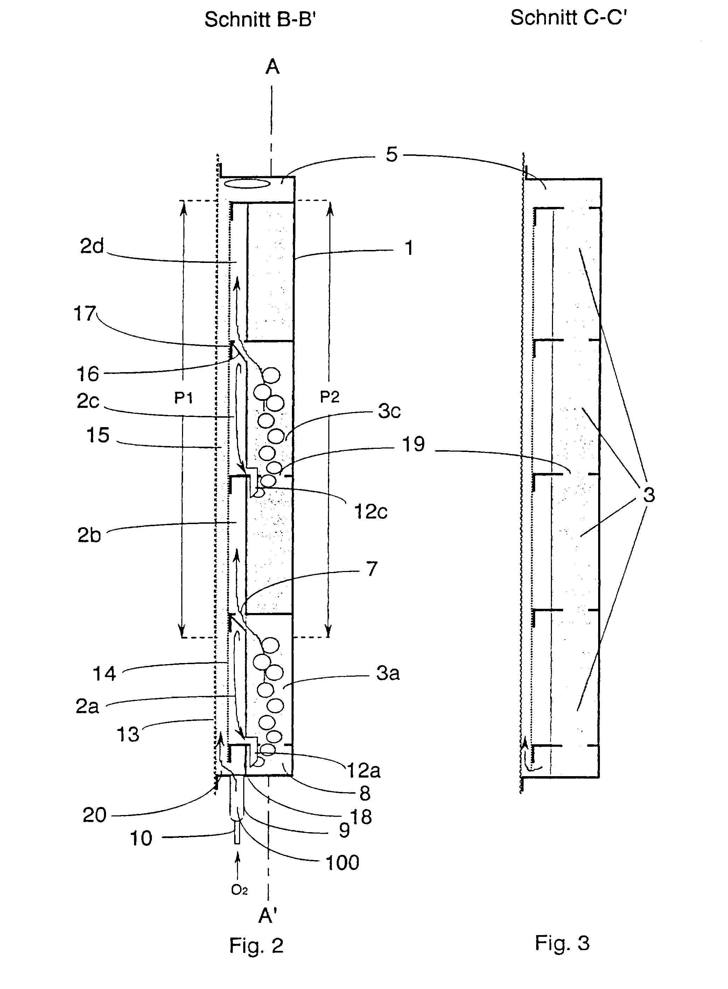

Eine als Sauerstoffverzehrkathode geschaltete elektrochemische Halbzelle weist folgenden Grundaufbau (siehe Figur 2) auf.

Die Halbzelle 1 ist von einer anderen Halbzelle (nicht gezeichnet) durch eine Membran 13 getrennt. Elektrolyt 100 (hier wäßrige NaOH) wird über eine Versorgungsleitung 9 dem Elektrodenraum 20 zugeführt und strömt zwischen Membran 13 und einer Gasdiffusionselektrode 14 durch den Elektrolytspalt 15 bis zur Sammelkammer 5. Die Elektrode 14 ist über einen nichtgezeichneten niederohmigen elektrischen Kontakt nach außen mit einer externen Stromquelle verbunden.

Der Gasraum 2 hinter der Diffusionselektrode 14 ist in übereinanderliegende Gastaschen 2a, 2b, 2c, 2d aufgeteilt. Der Rückraum 3 hinter den Gastaschen 2a - 2d, enthält Elektrolyt 100 der über die Sammelkammer 5 mit dem Elektrolyt 100 im Elektrolytspalt 15 im Druckgleichgewicht steht.

Die verschiedenen nachfolgenden Beispiele unterscheiden sich voneinander im wesentlichen durch die besondere Gestaltung der Gaszuführung und Gasabführung der Gastaschen 2a - 2d.

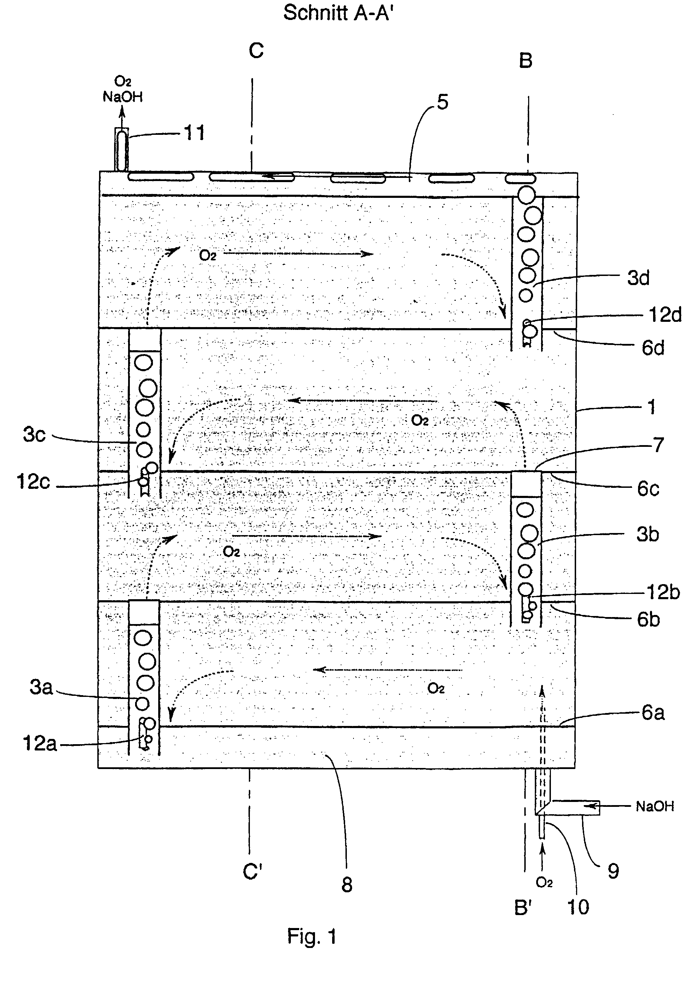

Nach der direkten Bespeisung der untersten Gastasche 2a wird das Überschußgas über ein Tauchrohr 12a in einen Blasenkanal 3a geleitet, wie in Figur 1 dargestellt. Der Blasenkanal 3a ist unten offen und steht damit in Verbindung mit dem druckkompensierenden Elektrolyten 100 des Rückraumes 3. Seitlich und oben ist der Blasenkanal 3a bis auf eine Öffnung 7 in die nächsthöhere Gastasche 2b geschlossen. Die Rückseite des Blasenkanals 3a wird entweder durch die Rückwand der elektrochemischen Halbzelle 1 (siehe Figur 2: Schnitt B - B') oder aber durch eine eigenständige Abschlußwand (nicht gezeichnet) gebildet. Letztere Bauweise ermöglicht z.B. die eigenständige Montage und Demontage des Gastascheneinsatzes. Die aufsteigenden Blasen trennen sich vom Elektrolyten im oberen Bereich des Blasenkanals 3a in der Höhe des Meniskus, der sich durch das Ende des Tauchrohrs 12b zur Abfuhr des Überschußgases auf der anderen Seite der nächsthöheren Gastasche 2b unter Berücksichtigung der Blaseneffekte im Blasenkanal 3a einstellt. Der Druckausgleich in der druckkompensierenden rückwärtigen Flüssigkeit, hier der aktiv an der Reaktion teilnehmende Elektrolyt 100, erfolgt über Bohrungen 19 in den rückwärtigen Strukturelementen 6a-6d (siehe Figur 3, Schnitt C -C'). Die aktive Durchströmung des Elektrolytspaltes 15 zwischen Membran 13 und Gasdiffusionselektrode 14 ist durch ein Trennblech 18 zwischen Rückraum 3 und Elektrolyt-Verteilkammer 20 gewährleistet, während in der oberen Sammelkammer 5 Elektrolytspalt 15 und Rückraum 3 für den Druckausgleich miteinander verbunden sind.

### Beispiel 2

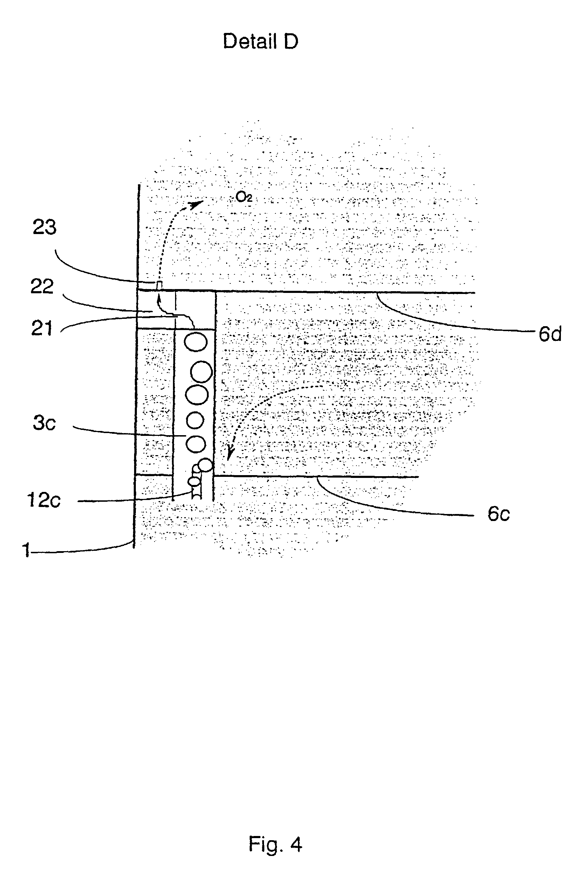

In der besonders vorteilhaften Variante der Halbzelle 1 wie in Figur 1 und im Detail von Figur 4 gezeigt, haben die Blasenkanäle 3a - 3d keine direkte Öffnung in die jeweilige Gastasche 2a, 2b, 2c, 2d, sondern eine seitliche Verbindung 21 im oberen Bereich der sich sammelnden Gasblasen in den nur nach unten offenen Bereich 22 neben dem Blasenkanal 3a - 3d. Aus dem Bereich 22 wird das beruhigte, vom Spray zerplatzender Gasblasen befreite Gas über eine Bohrung 23 gezielt in die nächste Gastasche 2b - 2d geleitet, wie in Figur 4 dargestellt ist. Die horizontale Lage der Blasenkanäle 3a - 3d ist hierbei beliebig und braucht sich hier nur nach den konstruktiven Rahmenbedingungen der jeweiligen elektrochemischen Halbzelle zu richten. Entscheidend für die aktive Durchströmung der Gastasche 2a, 2b, 2c, 2d ist lediglich die jeweils seitliche Lage der Gaszufuhr- und -abfuhröffnung einer jeden Gastasche 2a - 2d, die gegebenenfalls bei der Gasabfuhr durch ein innenliegendes zur Seite geführtes (nichtgezeichnetes) Gassammelrohr auf die der Gaszufuhr gegenüberliegende Seite realisiert wird.

In beiden Fällen erfolgt die Weitergabe des Elektrodengases kaskadenartig über gleichartige Baugruppen von unteren Gastaschen 2a-2c in die nächsthöheren Gastaschen 2b - 2d bis zur Abfuhr des nichtverbrauchten Elektrodengases, das z.B. gemeinsam mit dem Elektrolyten durch ein Rohr 11 abgeleitet wird.

Diese Variante eignet sich besonders für Elektrolyseure mit vertikal ausgeprägten Strukturen.

### Beispiel 3

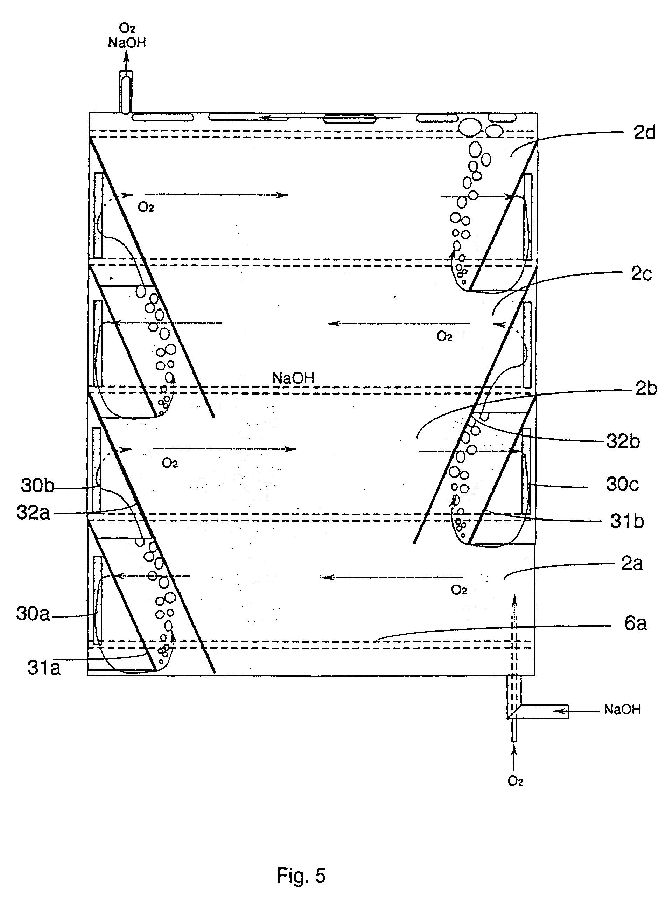

Eine weitere Alternative der Druckkompensation ist durch folgende Elemente gekennzeichnet: nach einer unter Beispiel 1 beschriebenen Beaufschlagung der untersten Gastasche 2a verläßt das Überschußgas über eine Öffnung 30a die ansonsten allseitig geschlossene Gastasche 2a, entsprechend Figur 5, und sammelt sich in der Seitenschürze 31a, die ihrerseits auf der Rückseite gesondert verschlossen ist, oder gasdicht mit der Rückwand der elektrochemischen Halbzelle abschließt. Über die unten offene, mit der druckkompensierenden Flüssigkeit in Verbindung stehende Seitenschürze 31a perlt das überschüssige Elektrodengas in die Seitenschürze 32a, welche analog zur Schürze 31a aufgebaut ist. Die Seitenschürze 32a ist soweit seitlich verlängert, daß die von der Gastasche 31a aufsteigenden Gasblasen sicher aufgefangen werden. Das Elektrodengas sammelt sich hier und tritt über die Öffnung 30b in die nächsthöhere Gastasche 2b ein. Das Überschußgas verläßt die Gastasche 2b über die Öffnung 30c, wo es sich in der Seitenschürze 31b sammelt, überläuft und von der Seitenschürze 32b gesammelt wird. Der Vorgang wiederholt sich kaskadenartig bis zum Verlassen der Zelle analog dem Beispiel 1. Wesentlich ist, daß der Bereich außerhalb der Seitenschürzen und hinter den Gastaschen 2a - 2d durchgehend mit der druckkompensierenden Flüssigkeit gefüllt ist. Dies Anordnung ermöglicht eine besonders flachgebaute Halbzelle

### Beispiel 4

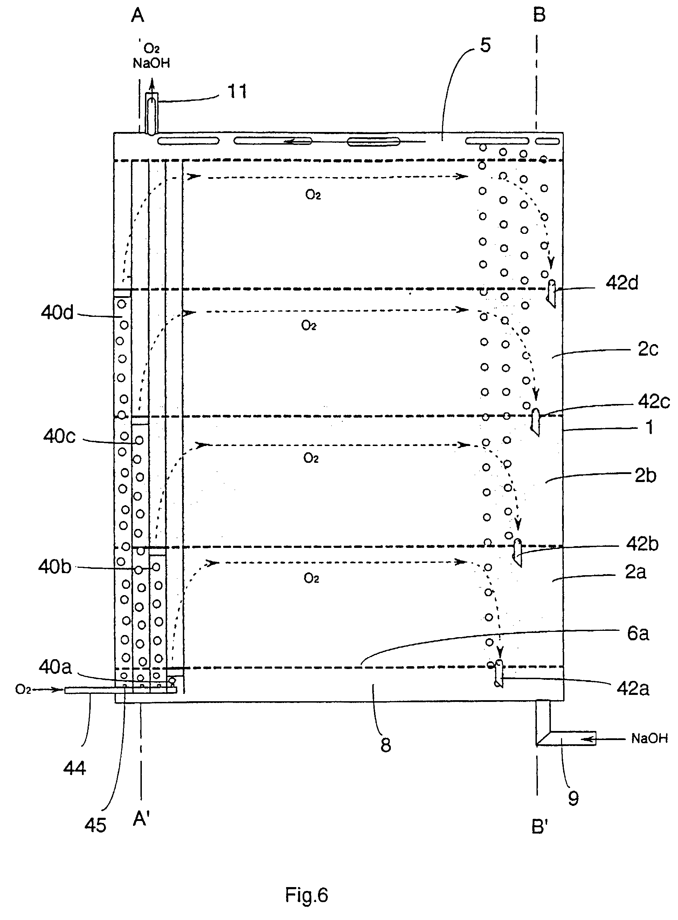

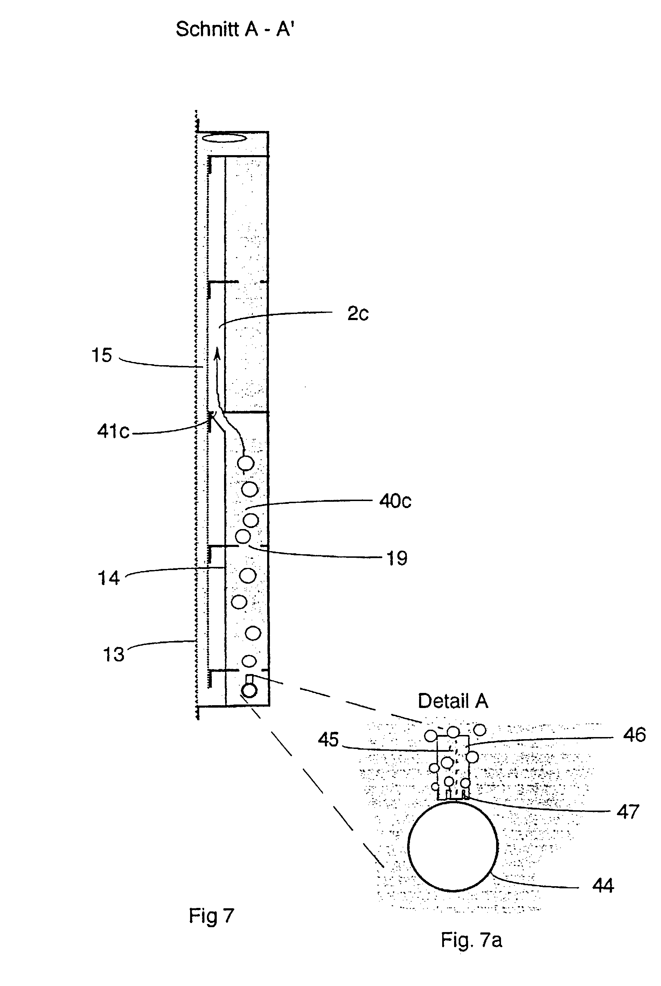

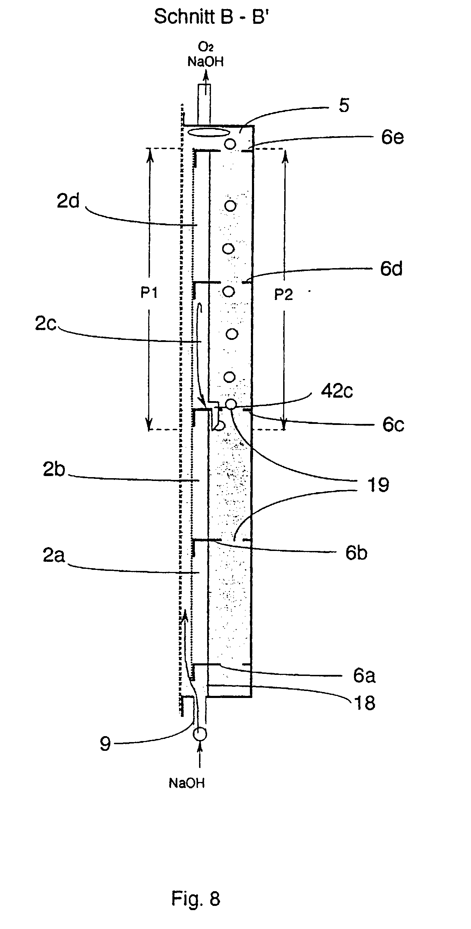

Für bestimmte Anwendungen, z.B. für Fälle, in denen eine Anreicherung von Schadgasen, die bei der Kaskadenschaltung der Gastaschen 2a - 2d, insbesondere in den oberen Gastaschen unvermeidlich ist, vermieden werden muß, kann eine direkte Bespeisung der jeweiligen Gastaschen 2a - 2d mit frischem Elektrodengas notwendig sein. In der Ausführung nach Figur 6 werden die für die Gasabführung genutzten Blasenkanäle 42a bis 42d analog Beispiel 1 ausgeführt. Anders als dort werden die jeweiligen Gaszuführungskanäle 40a, 40b, 40c, 40d jedoch direkt bis an die jeweiligen Gastaschen hochgezogen und über entsprechende Öffnungen, wie beispielsweise 41c im Schnitt A -A' in Figur 7 dargestellt, in die Gastasche 2c eingeleitet. Wesentlich ist, daß die Blasenkanäle 40a - 40d unten offen sind und mit der druckkompensierenden Flüssigkeit (Elektrolyt 100) direkt in Verbindung stehen. Die Bespeisung der Blasenkanäle erfolgt über das Verteilerrohr 44, das über je eine Düse 45 in den betreffenden Blasenkanal 40a-40d einspeist. Die Bedingungen an der jeweiligen Düse 45 sind isobar wegen der direkten Verbindung mit der druckkompensierenden Flüssigkeit, was zu einer gleichmäßigen Einspeisung in die jeweiligen Blasenkanäle führt. Um zu verhindern, daß Elektrolyt 100 in die Düsen 45 zurückströmt, sind diese mit Tauchglocken-ähnlichen Kappen 46 abgedeckt (siehe Detail A am Schnitt A-A' in Figur 7a). Die kontrollierte Blasenfreigabe erfolgt über Schlitze 47 am unteren Ende der Kappen 46. Das Elektrodengas durchströmt die Gastasche und verläßt die Tasche, beispielsweise Tasche 2c, am gegenüberliegenden Ende über das Tauchrohr 42c, wie am Schnitt B - B' in Figur 8 zusammen mit der Druckkompensation dargestellt. Für einen freien Aufstieg der Blasen und den notwenigen Druckausgleich sorgen wiederum die Durchbrüche 19 in den rückwärtigen Strukturelementen 6a-6e.

### Beispiel 5

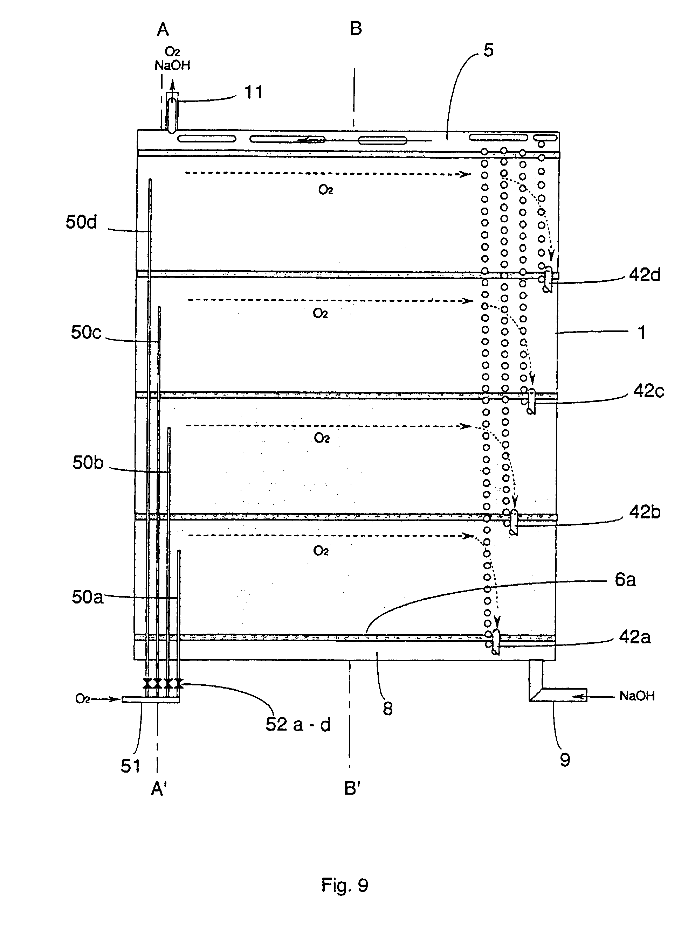

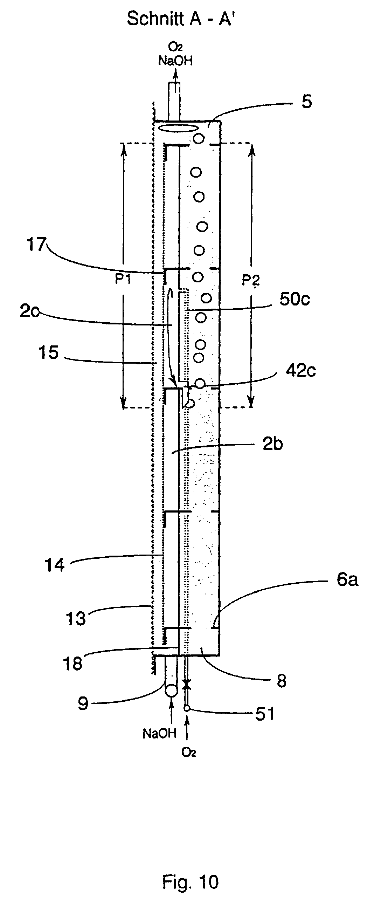

Eine weitere Variante der erfindungsgemäßen Halbzelle ist in Figur 9 dargestellt: hier erfolgt die Bespeisung der einzelnen Gastaschen 2a - 2d über direkte Einsteckrohre 50a, 50b, 50c, 50d. Um hier eine gleichmäßige Bespeisung der Gastaschen 2a - 2d sicherstellen zu können, müssen die einzelnen Rohre 50a - 50d entsprechend den Druckverhältnissen in den zugehörigen Gastaschen z.B. über Drosseln 52a - 52d gegenüber dem Einspeiserohr 51 angedrosselt werden. Die Anpassung kann jedoch einmalig erfolgen oder fest installiert werden. Wie in Schnitt A -A' in Figur 10 dargestellt, verläßt das nicht gebrauchte Elektrodengas völlig analog dem vorigen Beispiel nach Durchströmen der Gastasche 2c dieselbe über das Tauchrohr 42c. In beiden Fällen sind die rückwärtigen Strukturelemente 6a-6e durchbrochen, um einen freien Abtransport der Gasblasen und den Druckausgleich zu gewährleisten.

Insbesondere die letzte Variante ermöglicht eine besonders flache Halbzellenkonstruktion.

## Patentansprüche

1. Elektrochemische Halbzelle (1), bestehend wenigstens aus einem Elektrodenraum (3, 15) zur Aufnahme eines Elektrolyten (100), einem Gasraum (2) und mindestens einer Gasraum (2) und Elektrodenraum (3, 15) trennenden Gasdiffusionselektrode (14) als Anode oder Kathode, in der der Gasraum (2) in zwei oder mehrere übereinanderliegende Gastaschen (2a, 2b, 2c, 2d) aufgeteilt ist, die voneinander getrennt sind und eine Öffnung (7) zum Elektrolyten (100) hin aufweisen, so daß der Druck in jeder Gastasche (2a, 2b, 2c, 2d) über eine Öffnung (7) zum Elektrolyten (100) im Gleichgewicht zum Druck der Flüssigkeitssäule des Elektrolyten (100) im entsprechenden Teil (15) des vor der Gasdiffusionselektrode (14) liegenden Elektrodenraums (3, 15) steht, dadurch gekennzeichnet, daß die Gaszuführung (7) und die Gasabführung (12a, 12b, 12c, 12d) der einzelnen Gastaschen (2a, 2b, 2c, 2d) räumlich voneinander getrennt sind.

2. Halbzelle gemäß Anspruch 1, dadurch gekennzeichnet, daß die Gaszuführung (7) und die Gasabführung (12a, 12b, 12c, 12d) in der einzelnen Gastasche (2a, 2b, 2c, 2d) seitlich voneinander versetzt angeordnet sind, so daß eine seitliche Strömung des Elektrodengases in der Gastasche (2a, 2b, 2c, 2d) resultiert.

3. Halbzelle gemäß den Ansprüchen 1 bis 2, dadurch gekennzeichnet, daß die übereinanderliegenden Gastaschen 2a, 2b, 2c, 2d) durch eine Verbindung von Gasabführung (12a, 12b, 12c, 12d) einer unteren Gastasche (2a, 2b, 2c) zur Gaszuführung (3a, 3b, 3c, 3d) einer darüber liegenden Gastasche (2b, 2c, 2d) kaskadenartig miteinander verbunden sind.

4. Halbzelle gemäß den Ansprüchen 1 bis 2, dadurch gekennzeichnet, daß die Gastaschen (2a, 2b, 2c, 2d) je eine direkte Gaszuführung aufweisen.

5. Halbzelle gemäß den Ansprüchen 1 bis 4, dadurch gekennzeichnet, daß die Gastaschen (2a, 2b, 2c, 2d) eine Tauchung (42a, 42b, 42c, 42d) zur Ableitung des Überschußgases aus der Gastasche (2a, 2b, 2c, 2d) aufweisen.

6. Halbzelle gemäß den Ansprüchen 1 bis 5, dadurch gekennzeichnet, daß die Gastaschen (2a, 2b, 2c, 2d) Blasenkanäle (3a, 3b, 3c, 3d) zur Aufnahme von zuströmendem Elektrodengas aufweisen, die mit der Öffnung (7) direkt oder indirekt verbunden sind.

7. Halbzelle gemäß den Ansprüchen 1 bis 6, dadurch gekennzeichnet, daß die Gastaschen (2a, 2b, 2c, 2d) seitliche Gassammelschürzen (32a, 32b, 32c, 32d) als Gaszuführungen und/oder seitliche Schürzen (31a, 31b, 31c, 31d) als Gasabführungen aufweisen.

8. Halbzelle gemäß den Ansprüchen 1 bis 7, dadurch gekennzeichnet, daß die Gastaschen (2a, 2b, 2c, 2d) zum Elektrolyten (100) offene Blasenkanäle (40a, 40b, 40c, 40d) für eine direkte unabhängige Gaszufuhr aufweisen.

9. Halbzelle gemäß Anspruch 8, dadurch gekennzeichnet, daß die Gaszufuhr der Blasenkanäle (40a, 40b, 40c, 40d) über angedrosselte Düsen (45) erfolgt, die gegebenenfalls mit seitlich geschlitzten Tauchglocken (46) abgedeckt sind.

10. Halbzelle gemäß Anspruch 4, dadurch gekennzeichnet, daß die Gastaschen (2a, 2b, 2c, 2d) Einsteckrohre (50a, 50b, 50c, 50d) für die direkte Gaszufuhr aufweisen, die gegebenenfalls zusätzlich jeweils mit Regelventilen (52a, 52b, 52c, 52d) zur Regelung des Gasstromes in die Gastaschen (2a, 2b, 2c, 2d) versehen sind.

11. Halbzelle gemäß den Ansprüchen 1 bis 10, dadurch gekennzeichnet, daß die Gaszuführung (7) und die Gasabführungen (12a, 12b, 12c, 12d) übereinanderliegender Gastaschen (2a, 2b, 2c, 2d) auf wechselnden Seiten oder auf der jeweils gleichen Seite liegen.

12. Halbzelle nach den Ansprüchen 1-11, dadurch gekennzeichnet, daß durch hydraulische Trennung von Elektrolytspalt (15) und Elektrolytrückraum (3) der Differenzdruck zwischen den Bereichen vor und hinter der Gasdiffusionselektrode (14) frei eingestellt werden kann.

13. Halbzelle nach den Ansprüchen 1 bis 12, dadurch gekennzeichnet, daß die Gaszuführung (10) in die unterste Gastasche (2a) koaxial über einen Stutzen (10) gemeinsam mit der Elektrolytzuführung (9) in den Elektrodenraum (3, 15) erfolgt und/oder die Ableitung des Überschußgases zusammen mit dem Elektrolyten nach oben durch einen Ablaufstutzen (11) erfolgt.

14. Halbzelle nach den Ansprüchen 1 bis 13, dadurch gekennzeichnet, daß der Elektrolyspalt (15) oben mit dem Elektrolytrückraum (3) hinter den Gastaschen (2a, 2b, 2c, 2d) hydraulisch verbunden ist, wodurch Elektrolyt in den Elektrolytrückraum (3) überströmt und die Ableitung des Überschußgases gemeinsam mit dem Elektrolyten (22) über ein Standrohr im Bereich hinter den Gastaschen (2a, 2b, 2c, 2d) nach unten oder über einen seitlich angebrachten Stutzen mit auf gleicher Höhe liegendem Gas-Flüssigkeitstrenner zur Seite erfolgt.

15. Halbzelle nach Anspruch 14, dadurch gekennzeichnet, daß über die Höhe des Standrohres im Elektrolytrückraum (3) hinter den Gastaschen (2a, 2b, 2c, 2d) bzw. über die Höhenlage des seitlich angebrachten Stutzens der Flüssigkeitspegel des Elektrolyten (100) gegenüber dem Pegel des Elektrolyten (100) im Elektrolytspalt (15) unterschiedlich eingestellt werden und damit für alle Gastaschen (2a, 2b, 2c, 2d) der Differenzdruck zwischen Gasraum (2) und Elektrolytspalt (15) gleichermaßen variiert werden kann.

## Claims

1. Electrochemical half cell (1), consisting of at least one electrode space (3, 15) for receiving an electrolyte (100), a gas space (2), and at least one gas diffusion electrode (14) as anode or cathode and separating the gas space (2) and electrode space (3, 15), in which the gas space (2) is subdivided into two or more superimposed gas pockets (2a, 2b, 2c, 2d) that are separated from one another and have an opening (7) for the electrolyte (100) so that the pressure in each gas pocket (2a, 2b, 2c, 2d) is in equilibrium via an opening (7) for the electrolyte (100) with the pressure of the liquid column of the electrolyte (100) in the corresponding part (15) of the electrode space (3,15) in front of the gas diffusion electrode (14), characterised in that the gas inflow (7) and the gas outflow (12a, 12b, 12c, 12d) of the individual gas pockets (2a, 2b, 2c, 2d) are spatially separated from one another.

2. Half cell according to claim 1, characterised in that the gas inflow (7) and the gas outflow (12a, 12b, 12c, 12d) are arranged laterally displaced from one another in the individual gas pockets (2a, 2b, 2c, 2d) so that there is a lateral flow of the electrode gas in the gas pocket (2a, 2b, 2c, 2d).

3. Half cell according to claims 1 and 2, characterised in that the superimposed gas pockets (2a, 2b, 2c, 2d) are connected to one another in a cascade-like arrangement by connecting the gas outflow (12a, 12b, 12c, 12d) of a lower gas pocket (2a, 2b, 2c) to the gas inflow (3a, 3b, 3c, 3d) of an overlying gas pocket (2b, 2c, 2d).

4. Half cell according to claims 1 and 2, characterised in that the gas pockets (2a, 2b, 2c, 2d) each have a direct gas inflow.

5. Half cell according to claims 1 to 4, characterised in that the gas pocket 2a, 2b, 2c, 2d) have a dip tube (42a, 42b, 42c, 42d) for removing excess gas from the gas pocket (2a, 2b, 2c, 2d).

6. Half cell according to claims 1 to 5, characterised in that the gas pockets (2a, 2b, 2c, 2d) have bubble channels (3a, 3b, 3c, 3d) for receiving inflowing electrode gas, which are directly or indirectly connected to the opening (7).

7. Half cell according to claims 1 to 6, characterised in that the gas pockets (2a, 2b, 2c, 2d) have lateral gas collecting aprons (32a, 32b, 32c, 32d) as gas inflows and/or lateral aprons (31a, 31b, 31c, 31d) as gas outflows.

8. Half cell according to claims 1 to 7, characterised in that the gas pockets (2a, 2b, 2c, 2d) have open bubble channels (40a, 40b, 40c, 40d) for the electrolyte (100) for a direct independent gas feed.

9. Half cell according to claim 8, characterised in that the gas feed to the bubble channels (40a, 40b, 40c, 40d) takes place via throttled nozzles (45), which are optionally covered by sealing cones (46) having side slits.

10. Half cell according to claim 4, characterised in that the gas pockets (2a, 2b, 2c, 2d) have insert pipes (50a, 50b, 50c, 50d) for direct gas inflow, which are optionally provided in addition in each case with control valves (52a, 52b, 52c, 52d) to regulate the gas flow into the gas pockets (2a, 2b, 2c, 2d).

11. Half cell according to claims 1 to 10, characterised in that the gas inflow (7) and the gas outflows (12a, 12b, 12c, 12d) of superimposed gas pockets (2a, 2b, 2c, 2d) lie on alternate sides or in each case on the same side.

12. Half cell according to claims 1 to 11, characterised in that the differential pressure between the regions in front of and behind the gas diffusion electrode (14) can be freely adjusted by hydraulically separating the electrolyte gap (15) and electrolyte rear space (3).

13. Half cell according to claims 1 to 12, characterised in that the gas inflow (10) into the lowermost gas pocket (2a) takes place coaxially through a connecting pipe (10) together with the electrolyte inflow (9) into the electrode space (3, 15) and/or the discharge of the excess gas together with the electrolyte takes place at the top through an outflow pipe (11).

14. Half-cell according to claims 1 to 13, characterised in that the electrolyte gap (15) is hydraulically connected above to the electrolyte back space (3) behind the gas pockets (2a,2b,2c,2d), whereby electrolyte overflows into the electrolyte back space (3) and the excess gas together with the electrolyte (22) is discharged via a stand pipe in the region behind the gas pockets (2a, 2b,2c,2d) downwards or is discharged to the side via a laterally mounted connection pipe with a gas-liquid separator lying at the same height.

15. Half cell according to claim 14, characterised in that the liquid level of the electrolyte (100) can be adjusted differently relative to the level of the electrolyte (100) in the electrolyte gap (15) through the height of the stand pipe in the electrolyte rear space (3) behind the gas pockets (2a, 2b, 2c, 2d) or through the height of the laterally arranged pipe, and in this way the differential pressure between the gas space (2) and electrolyte gap (15) can likewise be varied for all gas pockets (2a, 2b, 2c, 2d).

## Revendications

1. Demi - cellule électrochimique (1), constituée d'au moins une chambre à électrode (3, 15) pour la réception d'un électrolyte (100), d'une chambre à gaz (2) et d'au moins une électrode à diffusion de gaz (14) séparant la chambre à gaz (2) et la chambre à électrode (3, 15) servant d'anode ou de cathode, dans laquelle la chambre à gaz (2) est divisée en plusieurs poches à gaz (2a, 2b, 2c, 2d) situées les unes au-dessus des autres, qui sont séparées les unes des autres et présentent une ouverture (7) vers l'électrolyte (100), de sorte que la pression dans chaque poche à gaz (2a, 2b, 2c, 2d) est équilibrée par une ouverture (7) sur l'électrolyte (100) par rapport à la pression de la colonne de liquide de l'électrolyte (100) dans la partie correspondante (15) de la chambre à électrode (3, 15) située en avant de l'électrode à diffusion de gaz (14), caractérisée en ce que l'amenée de gaz (7) et l'évacuation de gaz (12a, 12b, 12c, 12d) des poches à gaz individuelles (2a, 2b, 2c, 2d) sont séparées spatialement l'une de l'autre.

2. Demi - cellule selon la revendication 1, caractérisée en ce que l'amenée de gaz (7) et l'évacuation de gaz (12a, 12b, 12c, 12d) des poches à gaz individuelles (2a, 2b, 2c, 2d) sont décalées latéralement l'une par rapport à l'autre, de sorte qu'il en résulte un écoulement latéral du gaz d'électrode dans les poches à gaz (2a, 2b, 2c, 2d).

3. Demi - cellule selon les revendications 1 à 2, caractérisée en ce que les poches à gaz superposées (2a, 2b, 2c, 2d) sont reliées les unes aux autres en cascade par une liaison allant de l'évacuation de gaz (12a, 12b, 12c, 12d) d'une poche à gaz inférieure (2a, 2b, 2c) vers l'amenée de gaz (3a, 3b, 3c, 3d) d'une poche à gaz (2b, 2c, 2d) située par-dessus.

4. Demi - cellule selon les revendications 1 à 2, caractérisée en ce que les poches à gaz (2a, 2b, 2c, 2d) présentent chacune un amenée directe de gaz.

5. Demi - cellule selon les revendications 1 à 4, caractérisée en ce que les poches à gaz (2a, 2b, 2c, 2d) présentent un plongeur (42a, 42b, 42c, 42d) pour l'évacuation du gaz en excès hors de la poche à gaz (2a, 2b, 2c, 2d).

6. Demi - cellule selon les revendications 1 à 5, caractérisée en ce que les poches à gaz (2a, 2b, 2c, 2d) présentent des canaux de barbotage (3a, 3b, 3c, 3d) pour la réception du gaz d'électrode qui y arrive, qui sont reliés directement ou indirectement à l'ouverture (7).

7. Demi - cellule selon les revendications 1 à 6, caractérisée en ce que les poches à gaz (2a, 2b, 2c, 2d) présentent des jupes latérales de collecte de gaz (32a, 32b, 32c, 32d) servant d'amenée de gaz et/ou des jupes latérales (31a, 31b, 31c, 31d) servant d'évacuation de gaz.

8. Demi - cellule selon les revendications 1 à 7, caractérisée en ce que les poches gaz (2a, 2b, 2c, 2d) présentent des canaux de barbotage (40a, 40b, 40c, 40d) ouverts sur l'électrolyte (100), pour une amenée directe et indépendante de gaz.

9. Demi - cellule selon la revendication 8, caractérisée en ce que l'amenée de gaz aux canaux de barbotage (40a, 40b, 40c, 40d) s'effectue par des gicleurs étranglés (45) qui sont éventuellement recouverts par des cloches immergées (46) fendues latéralement.

10. Demi - cellule selon la revendication 4, caractérisée en ce que les poches à gaz (2a, 2b, 2c, 2d) présentent des tubes enfichés (50a, 50b, 50c, 50d) pour l'amenée directe de gaz, qui sont éventuellement dotés en supplément chacun d'une vanne de régulation (52a, 52b, 52c, 52d) pour la régulation de l'écoulement de gaz dans les poches à gaz (2a, 2b, 2c, 2d).

11. Demi - cellule selon les revendications 1 à 10, caractérisée en ce que l'amenée de gaz (7) et les évacuations de gaz (12a, 12b, 12c, 12d) de poches à gaz (2a, 2b, 2c, 2d) superposées sont situées sur des côtés alternés ou chaque fois du même côté.

12. Demi - cellule selon les revendications 1 - 11, caractérisée en ce que la différence de pression entre les zones situées en avant et en arrière de l'électrode (14) à diffusion de gaz peut être réglée librement par séparation hydraulique de l'interstice d'électrolyte (15) et la chambre arrière d'électrolyte (3).

13. Demi - cellule selon les revendications 1 à 12, caractérisée en ce que l'amenée de gaz (10) dans la poche à gaz inférieure (2a) s'effectue coaxialement par un raccord (10) commun à l'amenée d'électrolyte (9) dans la chambre à électrode (3, 15), et/ou l'évacuation du gaz en excès s'effectue en même temps que l'électrolyte, vers le haut, par un raccord d'évacuation (11).

14. Demi - cellule selon les revendications 1 à 13, caractérisée en ce que dans le haut, l'interstice d'électrolyte (15) est relié hydrauliquement à la chambre arrière d'électrolyte (3), en arrière des poches à gaz (2a, 2b, 2c, 2d) grâce à quoi l'électrolyte déborde dans la chambre arrière d'électrolyte (3), et l'évacuation du gaz en excès s'effectue vers le bas en même temps que l'électrolyte (22), par un tube vertical situé dans la zone en arrière des poches à gaz (2a, 2b, 2c, 2d), ou vers le côté, par un raccord qui est disposé latéralement et qui présente un séparateur gaz - liquide situé à même hauteur.

15. Demi - cellule selon la revendication 14, caractérisée en ce que le niveau de liquide de l'électrolyte (100) peut être réglé à différentes hauteurs par rapport au niveau de l'électrolyte (100) dans l'interstice d'électrolyte (15) par la hauteur du tube vertical dans la chambre arrière d'électrolyte (3) en arrière des poches à gaz (2a, 2b, 2c, 2d) ou par la position en hauteur du raccord installé latéralement, et ainsi, la différence de pression entre la chambre à gaz (2) et l'interstice d'électrolyte (15) peut être modifiée de la même manière pour toutes les poches à gaz (2a, 2b, 2c, 2d).
